# EUROPEAN PATENT SPECIFICATION

(11) **EP 0 605 177 B1**
(45) Date of publication and mention of the grant of the patent: **26.02.1997**
(21) Application number: 93310378.0
(22) Date of filing: 21.12.1993
(51) Int. Cl.: B60C 9/20, B60C 9/28, B60C 17/00

(54) **Pneumatic tire**
Luftreifen
Bandage pneumatique

(30) Priority: 24.12.1992 JP 344675/92
(43) Date of publication of application: 06.07.1994
(73) Proprietor: BRIDGESTONE CORPORATION, Tokyo 104 (JP)
(72) Inventor: Hayashi , Kazuo, Kodaira-shi, Tokyo (JP); Iwasaki, Shizuo, Kodaira-shi, Tokyo (JP)
(74) Representative: Whalley, Kevin

(56) References cited:
- EP-A- 0 364 291
- FR-A- 2 287 350
- FR-A- 2 343 616
- FR-A- 2 350 973
- FR-A- 2 358 998
- FR-A- 2 425 334

## Description

This invention relates to a pneumatic tire, and in particular to a so-called "run flat tire" which has reinforcing rubber layers having a crescent shaped cross-section in the whole region of the tire sidewall portions, in order to enable vehicles to run a long distance under a puncture condition. Such a tire should have a good run flat durability so that it can be run over a long distance under the puncture condition without developing problems as compared with conventional run flat tires by reinforcing the tread portion of the tire properly.

In order to enable a vehicle to continue to run safely for a relatively short distance and reach a suitable destination such as a service station where a punctured tire can be replaced without further damage to the tire or loss of manoeuvrability when the inner pressure of the tire fitted to the vehicle is reduced or becomes zero, a number of proposals have been made.

Among these, employment of reinforcing layers in the whole region of the sidewall portions of so called "run flat tire" is generally adopted as a most efficient measure. By this means, the load of the tire supported mainly by inner pressure and also by the reinforcing layer under the normal inner pressure is taken over by the reinforcing layer alone in the puncture state.

In the puncture state, the sidewall portions of pneumatic tire, without such reinforcing layer, are usually unable to withstand the wheel weight, and are deformed into a conduplicate (folded) shape. This results in a serious problem. In the run flat tire, however, although the sidewall portions are bent considerably, the pneumatic radial tire can continue to run by virtue of the reinforcing layer of a shape and material capable of bearing the wheel weight for a relatively short distance without damaging the sidewall portions and adversely affecting control of the vehicle.

The above mentioned run flat property is generally adopted in a high performance tire. In this regard, various properties such as steering property and anti-vibration riding comfortability to be performed during almost all driving periods must be maintained at a maximum level. Therefore, any adverse affects on the tire performance brought about by adopting a run flat property must be minimized.

In selection of cross-section shape and material of the reinforcing rubber layer, it is necessary to consider and adopt a limited thickness and hardness. Consequently, though the tire can be run safety for a certain distance, a limitation of running distance is brought about. Though it has a structural disadvantage for run flat property, radial carcass pneumatic tires are mostly used. However, due to demand for extending safety running distance in the puncture state, the above mentioned type of run flat tire no longer meets the desired requirements.

A tire according to the preamble of claim 1 is known from EP-A-0 515 226.

It is an object of this invention to provide a pneumatic tire with excellent run flat durability which is able to extend the running distance without problems occurring and while sufficiently maintaining safety in the puncture state, while being able to select the shape and material of the reinforcing rubber layer at an optimum level of performance within a conventional range.

By investigating movement of the deformation of the conventional run flat tire in the puncture state, we have found that bending deformation in the sidewall portions has a close relation with resisting force for bending deformation in the tread portion. Based on the above, we have been able to provide a pneumatic tire with excellent run flat durability by adopting a tire construction of the invention described below.

According to the invention, there is provided a pneumatic radial tire comprising a pair of bead portions and sidewall portions and a tread portion connecting the sidewalls and including at least one radial carcass play reinforcing each of said portions between two beads embedded in the bead portions, a belt comprising at least two layers having cords intersecting each other, a cap arranged between the belt and the tread portion and having organic fiber cords therein extending in the circumferential direction of the tire, and reinforcing rubber layers in a whole region of the sidewall portions for supporting a load of the tire and each having a crescent shaped cross-section along the inner side of the carcass, characterized in that at least one tie-element layer for resisting force generated in width directions of the tire and having cords extending substantially orthogonally with respect to an equatorial plane of the tire is arranged between the belt and the cap.

For a better understanding of the invention, reference is made to the accompanying drawings, wherein:
Fig. 1 is a cross-section of the left half of one embodiment of a tire according to the present invention;
Fig. 2 is a view similar to Fig.l 1 of another embodiment of a tire of the present invention; and
Fig. 3 is a diagrammatic view illustrating behaviour of tires in a puncture state.

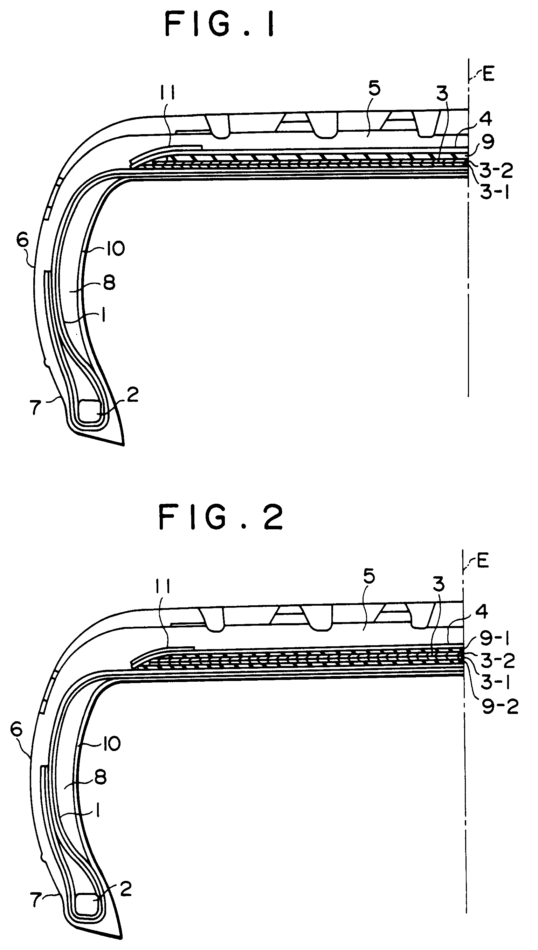

The present invention will be further explained with reference to Fig. 1, which shows a semi cross-sectional view of a pneumatic tire according to the present invention. The tire includes a carcass 1, a bead core 2, a belt 3, a cap 4, a tread portion 5, a sidewall portion 6, a bead portion 7, a reinforcing rubber layer 8, and a tie-element 9. The tire further includes an inner liner 10 and layers 11 at the edges of the belt.

The tire comprises at least one carcass ply (two plies in the drawing) containing cords arranged orthogonally (radially) with respect to an equatorial plane E of the tire, and reinforces the bead portion 7, sidewall portion 6 and tread portion 5 between a pair of bead cores 2 embedded in a pair of bead portions 7 (only the bead portion at one side of the tire is shown).

The belt 3 comprises at least two cord intersecting layers (3-1, 3-2 in the drawing). The cords of each layer are.obliquely arranged in opposite directions with respect to the equatorial plane E, and form small crossing angles between the layers.

The cap 4 having organic fiber cords circumferentially wound around the tire prevents the belt 3 from expanding in a radial direction during running at a high speed. The cap 4 preferably has a width wider than that of the belt 3. The cap 4 improves running performance of a high performance tire by reinforcing the tread 5 together with the belt 3.

The reinforcing rubber layer 8 is preferably a rubber with a hardness which is greater than that of the rubber of the carcass 1 and the sidewall portions 6. Though the rubber reinforcing layer 8 also functions as a load supporting component under a normal inner pressure, the main object of the rubber is to enable the sidewall portions 6 to sufficiently support the load which cannot be supported by the side rubber and the carcass ply alone. Thus the rubber works as "stay element". Therefore, the reinforcing rubber layer 8 is preferably arranged in a whole region of the sidewall portion 6, more particularly from the side region of the bead core 2 in the radial direction to the side edge of the tread 5 along the inner surface of the carcass 1 and is tapered gradually in cross-section with its maximum thickness at the center.

Further, between the belt 3, more particularly the outer layer 3-2 of two cord intersecting layers 3-1 and 3-2, and the cap 4, there is arranged at least one tie-element layer 9 having cords extending substantially orthogonally with respect to the equatorial plane of the tire; by cords extending substantially orthogonally there is included unavoidable fluctuation of the product during production.

The tie-element 9 works as a component resisting force generated in the tread 5 in a width direction. The width of the tie-element 9 is preferably at least 50% of the narrower belt ply.

The cord used for the tie-element must have high tensile modulus or high compression modulus, for example aramide fiber twist cord for the former, nylon monofilament cord for the latter.

The cap 11 in Fig. 1 is a narrow cord layer wound in a certain designated region in a width direction along the outer surface of the belt 3 and the cap 4. In Fig. 1, the cap 11 covers both side edges of the belt 3 and the cap 4 to improve high performance at a high speed together with the cap 4.

In the embodiment shown in Fig. 2, which is a similar view to Fig. 1, two tie element layers 9-1 and 9-2 are provided. The tie-element 9-1 is arranged in the same manner as the layer 9 in Fig. 1 and the tie-element 9-2 is arranged between the inner cord intersecting layer 3-1 and the carcass 1. The belt 3 is arranged between the two layers 9-1 and 9-2.

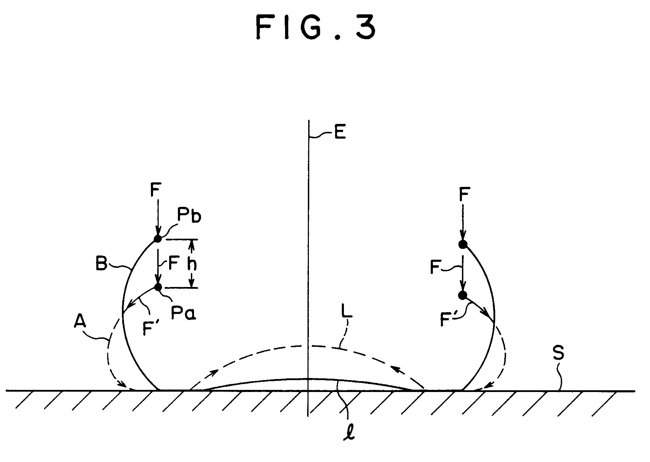

In Fig. 3, a broken line A indicates a conventional run flat tire (having rubber reinforcing layers 8) and a solid line B indicates a tire of the present invention, and the lines A and B show deformation of the outer profile of the run flat tires having the above mentioned reinforcing rubber layer 8 just under the load (wheel weight). Pa and Pb respectively show force application point from rim flange to the bead 7 in respect of the broken line A and the solid line B. S shows the road surface.

Though it is not described in the drawings, a conventional tire, without any reinforcing rubber layers 8, is crushed into a conduplicated shape because of lack of load support property. The conventional run flat tire having reinforcing rubber layers 8 has a function to support the load generated by deformation of the sidewalls as is shown by broken line A. This function is obtained by deformation resistance property of the reinforcing rubber layers 8 having large thickness portions at the center of the sidewall portions 6 which is brought about by the rubbers large compression modulus working for the deformation inside the rubber 8.

Because of this load support property, however, component force F' of wheel weight is directed as shown by arrows and is transmitted to both ends of the tread 5 through the reinforcing rubber layer 8. At this time, because the belt 3 and the cap 4 have no tension without inner pressure, the tread 5 cannot resist this force.

The tread 5, therefore, is curved to the inner side of the tire as shown by arc L. Consequently, the sidewall portion 6 is so deformed that some of the portions close to the tread 5 contact the road surface and rotate with slipping contact. This results in rapid abrasion of the rubber and damage of the carcass 1 at an early stage.

Curving of the tread 5 shown by arc L corresponds to decreasing of radius of movement. This brings increasing of oblique angles of the cords of cord intersecting layer 3-1, 3-2 of the belt 3. This is so-called "Pantograph phenomenon".

By arranging tie-element 9 (9-1) having cords arranged orthogonally with respect to the equatorial plane E of the tire between the cord intersecting layer 3-2 of the belt 3 and the cap 4, Pantograph phenomenon is efficiently restrained. This restraint substantially prevents the tread 5 from curving as is described by arc ℓ of Fig. 3.

Consequently the length of the curvature of the tread 5 is reduced from L of the conventional tire to ℓ of the tire of the present invention. This results in pushing up the bead 7 from point Pa to Pb which is higher than Pa by h. Therefore, slipping contact of the sidewall portions 6 with the road surface S is reduced drastically. Furthermore, sidewall portions having large thickness will as a consequence contact with the road surface.

Moreover, by arranging the tie element 9-2 additionally between the cord intersecting layer 3-1 and the carcass 1, the above effect can be further improved.

Although for the conventional run flat tire the load supporting property of the reinforcing rubber layer 8 cannot work sufficiently, the reinforcing rubber layer 8 in the present invention can function sufficiently when the tie-element 9 (9-1, 9-2) is provided.

The invention will be further described with reference to the following Example.

High performance passenger pneumatic radial tires whose constructions were the same as that of Fig. 1 and Fig. 2 were prepared. The size was P275/40ZR17. The carcass comprised two plies having rayon cord. The belt 3 comprised 2 layers having steel cord arranged at an oblique angle of 60°. The cap 4 comprised one layer having nylon cord, and the layer 11 comprised a pair of layers having nylon cord. The reinforcing rubber layer was rubber stock whose JIS hardness was 84 and whose maximum thickness was 7 mm.

For tires having a construction described above, there was used as a tie element one layer having aramide fiber cord in an embodiment 1 and one layer having nylon monofilament cord in an embodiment 2. In embodiments 3 and 4 having two tie-element layers 9-1 and 9-2, aramide fiber layer were used for both layers 9-1 and 9-2 in the embodiment 3, and a nylon monofilament cord layer was used for layer 9-1 and an aramide fiber cord layer was used for layer 9-2 in the embodiment 4. For the monofilament cord, HYTEN manufactured by Dupont was used. The width of tie-elements 9, 9-1 and 9-2 were 98% of the width of the narrowest cord intersecting layer.

For each tire of the above embodiments 1 to 4, and for a conventional tire without any tie-element but otherwise having the same construction, the following experiment was conducted. A vehicle was run in a puncture state caused by pulling out of the bulb core at a speed of 90 Km/h on a circuit until considerable damage was caused to the tires.

Evaluation was made based on distance until generation of damage, by using an index wherein 100 corresponds to the conventional tire. Results were 200 for the embodiment tire 1, 400 for the embodiment tire 2, 230 for the embodiment tire 3, and 460 for the embodiment tire 4.

From above evaluation results, a remarkable effect obtained by providing the tie-element was found. In particular, the embodiment 2 with the tie-element outside the belt 3 affected by compression force when curved and made of nylon monofilament cord which has compression resistance property, and embodiment 4 with the tie-element 9-2 inside the carcass 1 affected by stretching force and made of aramide fiber cord which has stretching property in addition to the layer 9-1 of embodiment 2, showed remarkably good results.

Thus the pneumatic tire according to the invention has excellent run flat durability as well as high overall performance.

It is further understood by those skilled in the art that the foregoing description is that of preferred embodiments of the disclosed tires and that various changes and modifications may be made in the invention without departing from the invention as defined in the appended claims.

## Claims

1. A pneumatic radial tire comprising a pair of bead portions (7) and sidewall portions (6) and a tread portion (5) connecting the sidewalls and including at least one radial carcass ply reinforcing each of said portions between two beads (2) embedded in the bead portions, a belt (3) comprising at least two layers (3-1, 3-2) having cords intersecting each other, a cap (4) arranged between the belt (3) and the tread portion (5) and having organic fiber cords therein extending in the circumferential direction of the tire, and reinforcing rubber layers (8) in a whole region of the side wall portions (6) for supporting a load of the tire and each having a crescent shaped cross-section along the inner side of the carcass, characterized in that at least one tie-element layer (9) for resisting force generated in width directions of the tire and having cords extending substantially orthogonally with respect to an equatorial plane of the tire is arranged between the belt (3) and the cap (4).

2. A pneumatic radial tire as claimed in claim 1, characterized in that a said tie-element layer (9-1) is arranged between the belt (3) and the cap (4) and a further tie-element layer (9-2) having cords extending substantially orthogonally with respect to the equatorial plane of the tire is arranged between the belt (3) and the carcass (1).

## Patentansprüche

1. Radialer Luftreifen, mit zwei Wulstbereichen (7) und zwei Seitenwandbereichen (6), und einem Laufflächenbereich (5), der die Seitenwände miteinander verbindet und mindestens eine radiale Karkassenlage umfaßt, die jeden der Bereiche zwischen den zwei in die Wulstbereiche eingebetteten Wulsten (2) verstärkt, einem Gürtel (3), der mindestens zwei Schichten (3-1, 3-2) aufweist, die einander überkreuzende Cordfäden haben, einer Deckschicht (4), die zwischen dem Gürtel (3) und dem Laufflächenbereich (5) angeordnet ist, und Cordfäden aus einer organischen Faser enthält, die sich in der Umfangsrichtung des Reifens erstrecken, und Verstärkungsgummischichten (8) in dem ganzen Gebiet der Seitenwandbereiche (6), um eine Last des Reifens zu tragen, wobei jede dieser Verstärkungsgummischichten einen halbmondförmigen Querschnitt längs der inneren Seite der Karkasse hat, dadurch gekennzeichnet, daß mindestens eine Zugelement-Schicht (9), die dazu bestimmt ist, der in den Breitenrichtungen des Reifens erzeugten Kraft zu widerstehen, und die Cordfäden hat, die sich im wesentlichen orthogonal zu der Äquatorebene des Reifens erstrecken, zwischen dem Gürtel (3) und der Deckschicht (4) angeordnet ist.

2. Radialer Luftreifen gemäß Anspruch 1, dadurch gekennzeichnet, daß eine Zugelement-Schicht (9-1) zwischen dem Gürtel (3) und der Deckschicht (4) angeordnet ist, und eine weitere Zugelement-Schicht (9-2), die Cordfäden hat, die sich im wesentlichen orthogonal zu der Äquatorebene des Reifens erstrecken, zwischen dem Gürtel (3) und der Karkasse (1) angeordnet ist.

## Revendications

1. Bandage pneumatique radial comprenant une paire de parties de talon (7) et de parties de flanc (6), ainsi qu'une partie de bande de roulement (5) connectant les flancs et englobant au moins une nappe de carcasse radiale renforçant chacune desdites parties entre deux talons (2) encastrés dans les parties de talon, une ceinture (3) comprenant au moins deux couches (3-1, 3-2) comportant des câblés se coupant les uns les autres, une chape (4) agencée entre la ceinture (3) et la partie de la bande de roulement (5) et comportant des câblés de fibres organiques s'étendant dans la direction circonférentielle du pneumatique, ainsi que des couches de renforcement en caoutchouc (8) dans l'ensemble de la région des parties de flanc (6), pour supporter une charge du pneumatique, ayant chacune une section en forme de croissant le long du côté interne de la carcasse, caractérisé en ce que au moins une couche d'éléments de liaison (9), destinée à résister à la force engendrée dans les directions de la largeur du pneumatique et comportant des câblés s'étendant de façon pratiquement orthogonale par rapport à un plan équatorial du pneumatique, est agencée entre la ceinture (3) et la chape (4).

2. Bandage pneumatique radial selon la revendication 1, caractérisé en e qu'une dite couche d'éléments de liaison (9-1) est agencée entre la ceinture (3) et la chape (4), une couche d'éléments de liaison additionnelle (9-2) comportant des câblés s'étendant de façon pratiquement orthogonale par rapport au plan équatorial du pneumatique étant agencée entre la ceinture (3) et la carcasse (1).
